(19)

Europäisches
Patentamt
European
Patent Office
Office européen
des brevets

(11) **EP 2 284 504 A1**

(12) **EUROPEAN PATENT APPLICATION**

(43) Date of publication:
  **16.02.2011 Bulletin 2011/07**

(51) Int Cl.:
  *G01G 17/02* (2006.01)    *G01G 19/00* (2006.01)
  *G01G 19/414* (2006.01)    *B07C 5/20* (2006.01)
  *G03G 15/00* (2006.01)    *G07B 17/00* (2006.01)

(21) Application number: **10154291.8**

(22) Date of filing: **22.02.2010**

(84) Designated Contracting States:
  **AT BE BG CH CY CZ DE DK EE ES FI FR GB GR HR HU IE IS IT LI LT LU LV MC MK MT NL NO PL PT RO SE SI SK SM TR**

(30) Priority: **10.08.2009 JP 2009185952**

(71) Applicant: **Kabushiki Kaisha Toshiba**
  **Minato-ku**
  **Tokyo 105-8001 (JP)**

(72) Inventors:
  • **ASARI, Yukio**
  **Tokyo Tokyo 105-8001 (JP)**

  • **MITSUYA, Yusuke**
  **Tokyo Tokyo 105-8001 (JP)**
  • **NARUOKA, Yoshihiko**
  **Tokyo Tokyo 105-8001 (JP)**
  • **TODORIKI, Toru**
  **Tokyo Tokyo 105-8001 (JP)**

(74) Representative: **Patentship**
  **Patentanwaltskanzlei GbR**
  **Vorhoelzerstraße 21**
  **81477 München (DE)**

(54) **Sheet mass measuring unit**

(57)    A mass measuring unit (10) includes two driving rollers (2U, 2L) vertically separate from each other and intersecting the direction of conveyance of a mail matter. Servo motors (6U, 6L) for driving the driving rollers (2U, 2L) are connected to torque detection units (8U, 8L). A control unit controls motor control units (7U, 7L) to cause them to impart a rate difference between the driving roll- ers to rotate the mail matter during its conveyance, and to cause the torque detection units (8U, 8L) to detect the torque values of the servo motors (6U, 6L). The control unit compares the thus detected torque values with the torque values of the servo motors detected when the ser- vo motors are idling without rotating the mail matter, thereby measuring the mass of the mail matter using a calculation unit.

F I G. 2

EP 2 284 504 A1

**Description**

The present invention relates to an apparatus for measuring the mass of a paper sheet, such as a mail matter, and more particularly, to an apparatus for measuring the mass of a paper sheet conveyed at a relatively high rate, without stopping the conveyance of the sheet.

Jpn. Pat. Appln. KOKAI Publication No. 2005-162407 (hereinafter, patent document 1), for example, discloses a mass detection apparatus as an apparatus for measuring the mass of a paper sheet during conveyance of the same. In the apparatus disclosed in patent document 1, the rotational rate of a driving roller provided along a conveyor path is varied to gradually vary the conveyance rate of a paper sheet conveyed held between the driving roller and a pinch roller, and a change in the torque applied to the driving roller in accordance with the mass of the paper sheet is detected, thereby calculating the mass of the paper sheet based on the detection result.

By thus detecting variations in the torque of the driving roller by increasing/decreasing the conveyance rate of a paper sheet held between the driving roller and the pinch roller, the mass of the paper sheet can be detected without stopping the sheet. Accordingly, the apparatus disclosed in patent document 1 can sequentially convey a large number of paper sheets at a relatively high rate, thereby realizing relatively high processing performance.

However, in the mass detection apparatus disclosed in patent document 1, it is necessary to change the conveyance rate of each paper sheet during conveyance thereof, and hence it is necessary to provide a sufficient gap between successive paper sheets, which inevitably reduces the throughput. Furthermore, in this apparatus, the ratio of an increase in the inertia moment of the driving mechanism comprising the driving roller itself subjected to acceleration/ deceleration control, the driving shaft of the driving roller, and/or the rotor of a motor for driving the driving roller, which inertia moment occurs when the driving mechanism conveys a paper sheet, to the inertia moment of the mechanism when it conveys no sheet, is extremely low. This inevitably reduces the mass detection accuracy.

It is an object of the invention to provide a paper sheet mass measuring unit capable of highly accurately measuring mass of a paper sheet and enhancing the throughput.

To attain the object, a mass measuring unit for measuring a mass of a sheet of paper, according to an embodiment, comprises: a conveyor path configured to convey a sheet of paper; a rotation mechanism configured to rotate and forward the sheet of paper along the conveyor path; a torque detection unit configured to detect torque of the rotation mechanism; and a calculation unit configured to calculate a mass of the sheet of paper, based on torque of the rotation mechanism that is detected by the torque detection unit when the rotation mechanism rotates the sheet of paper, and torque of the rotation mechanism that is detected by the torque detection unit when the rotation mechanism rotates no sheet of paper.

Further, a mass measuring unit for measuring a mass of a sheet of paper, according to a modification of the embodiment, comprises: a conveyor path configured to convey a sheet of paper; a rotation mechanism including a driving roller configured to rotate in contact with the sheet of paper conveyed by the conveyor path, and a motor configured to accelerate and/or decelerate the driving roller to rotate and forward the sheet of paper along the conveyor path; a torque detection unit configured to detect torque of the motor; and a calculation unit configured to calculate a mass of the sheet of paper, based on torque of the motor that is detected by the torque detection unit when the rotation mechanism rotates the sheet of paper, and torque of the motor that is detected by the torque detection unit when the rotation mechanism rotates no sheet of paper.

Yet further, a mass measuring unit for measuring a mass of a sheet of paper, according to another modification of the embodiment, comprises: a conveyor path configured to convey a sheet of paper; a rotation mechanism including a first driving roller, a second driving roller, a first motor, and a second motor, the first driving roller rotating in contact with a surface portion of the sheet of paper conveyed by the conveyor path, the second driving roller being vertically aligned with and separate from the first driving roller, the second driving roller rotating in contact with another surface portion of the sheet of paper conveyed by the conveyor path, the first and second motors independently accelerating and/or decelerating the driving rollers such that the driving rollers rotate at different rates, thereby rotating and forwarding the sheet of paper along the conveyor path; a torque detection unit configured to detect torque values of the first and second motors; a storing unit configured to beforehand store torque values of the first and second motors detected by the torque detection unit when the rotation mechanism is idling under same conditions as when rotating the sheet of paper, with no sheet of paper conveyed by the conveyor path; and a calculation unit configured to calculate a mass of the sheet of paper, based on torque values of the first and second motors that are detected by the torque detection unit when the rotation mechanism rotates the sheet of paper during conveyance thereof, and the torque values of the first and second motors stored in the storing unit.

In the above-described invention, a sheet of paper is rotated during its conveyance, and the torque of the rotation mechanism is detected, and is compared with the torque of the driving system beforehand measured under the same conditions but without rotating any sheet of paper, thereby measuring the mass of the sheet of paper. By virtue of this structure, the mass of each sheet of paper can be measured while sheets of paper are successively conveyed at high rate, and hence the conveyance throughput can be enhanced, compared to the conventional case where the mass of each sheet of paper is measured based on a change in torque detected when each sheet of paper is accelerated and decelerated along the conveyor path.

Further, in the above-described invention, since the mass of each sheet of paper is measured based on a change in the torque of the rotation mechanism detected when each sheet of paper is rotated by the rotation mechanism, a relatively high torque due to a relatively high rotation moment can be generated, and hence the mass of each mail matter M can be measured at high accuracy, compared to the conventional case where each sheet of paper is accelerated and decelerated along the conveyor path.

The invention can be more fully understood from the following detailed description when taken in conjunction with the accompanying drawings, in which:

FIG. 1 is a block diagram illustrating a mail matter selection/pickup/stamp canceling apparatus that incorporates a mass measuring unit according to an embodiment of the invention;

FIG. 2 is a schematic view illustrating an essential part of the mass measuring unit incorporated in the apparatus of FIG. 1;

FIG. 3 is a block diagram illustrating a control system for controlling the operation of the mass measuring unit shown in FIG. 2;

FIG. 4 is a view useful in explaining the operation of the mass measuring unit shown in FIG. 2;

FIG. 5 is a graph illustrating examples of rate patterns of the two driving rollers incorporated in the mass measuring unit shown in FIG. 2;

FIG. 6 is a view useful in explaining the ratio of the inertia moment of a mail matter to that of the driving system incorporated in the mass measuring unit shown in FIG. 2;

FIG. 7 is a table illustrating examples of the sizes, specific gravities, masses and the inertia moments of the structural elements incorporated in the mass measuring unit shown in FIG. 2; and

FIG. 8 is a table illustrating examples of inertia moment ratios, to the driving system, of mail matters of various sizes, the masses of which are measured by the mass measuring unit shown in FIG. 2.

An embodiment of the invention will be described in detail with reference to the accompanying drawings.

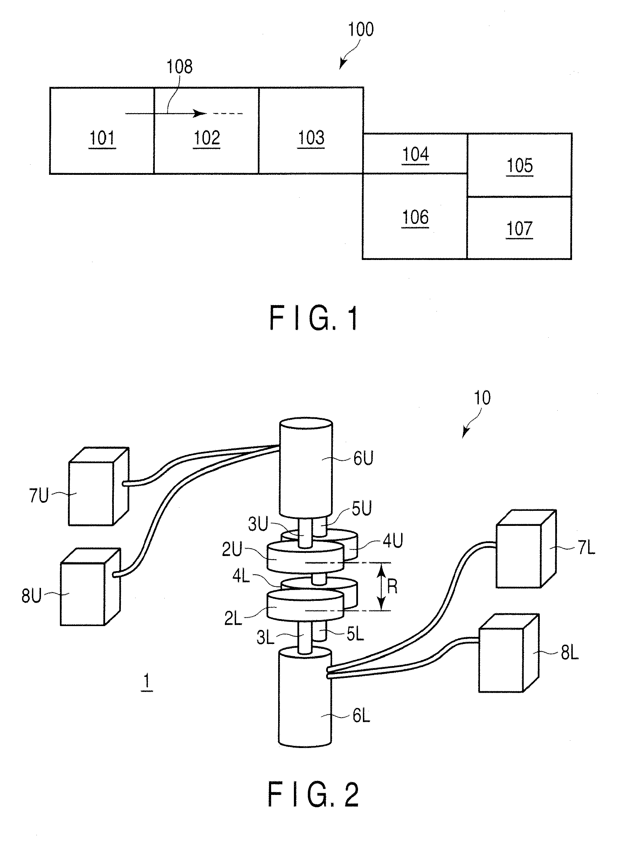

FIG. 1 is a schematic block diagram illustrating a mail matter selection/pickup/stamping apparatus 100 (hereinafter referred to simply as "the apparatus 100") that incorporates a mass measuring unit according to the embodiment of the invention.

The apparatus 100 comprises a supply unit 101, a mechanical detection unit 102, an OCR scanner unit 103, a twisting/reversing unit 104, a switchback unit 105, a stamp unit 106 and a delivery/stacker unit 107. The apparatus 100 also comprises a convey unit 108 for conveying mail matters M through the above-mentioned units. The apparatus 100 also comprises an operation panel (not shown) for instructing the apparatus to perform various operations, to switch the operation mode and to display abnormality.

The supply unit 101 simultaneously receives a plurality of mail matters M of standard sizes, mass and widths (perpendicular to the direction of conveyance) that fall within respective preset ranges, picks up the matters one by one and supplies them to the subsequent processing unit. The convey unit 108 includes a conveyor path 1 that runs through the post processing units 102 to 107 to convey each mail matter M to the units.

The mechanical detection unit 102 detects metals, foreign materials and the like contained in a mail matter M conveyed by the conveyor path 1 of the convey unit 8, and also detects simultaneous pickup of two or more mail matters M, or a short gap between mail matters. If the mechanical detection unit 102 determines that a mail matter cannot be processed by any of the post processing units 103 to 107, it ejects the mail matter into a reject/stacker unit (not shown). The mechanical detection unit 102 incorporates a mass measuring unit 10, described later, for measuring the mass of each mail matter M while each mail matter is conveyed.

Further, before a mail matter M reaches the mass measuring unit 10, the mechanical detection unit 102 detects the length of the mail matter M defined along the length of the convey path, and the width of the same defined along the width of the convey path, and detects, using a timing sensor (not shown), whether the front end of the mail matter M has passed, thereby acquiring information indicating the conveyance position of the mail matter M. Based on the detected length, width and conveyance position, the mechanical detection unit 102 operates the mass measuring unit 10 as described later to measure the mass of the mail matter M. If the mass measuring unit 10 detects that the mail matter M is extremely heavy, the mail matter M is ejected into the reject/stacker unit (not shown).

The OCR scanner unit 103 optically reads the surface of the mail matter M and subjects the reading result to photoelectric conversion, thereby acquiring, in the form of an image, delivery information such as a postal code and an address on the mail matter M. The OCR scanner unit 103 also detects whether a stamp is stuck to (or printed on) the mail matter M, and where on the mail matter M the stamp is stuck. Since the mail matters M supplied by the supply unit 101 differ in orientation (namely, the mail matters M may be upside down or reversed), the OCR scanner unit 103 includes at least two scanner units for reading both sides of each mail matter M.

The twisting/reversing unit 104 includes a twisting/reversing path (not shown) for twisting the received mail matter M through 180° about its axis extending along the conveyor path, thereby reversing the same during conveyance of the same. Namely, the twisting/reversing unit 104 reverses only front-back both sides of the mail matter M and does not reverse the conveyance direction of the same. The twisting/reversing unit 104 also includes a bypass (straight path) for bypassing the twisting/reversing path so as not to feed the mail mater M thereto.

The switchback unit 105 includes two switchback mechanisms (not shown) each for receiving the mail matter M and feeding the same in the opposite direction. The switchback unit 105 also includes a bypass (straight path) for bypassing the two switchback mechanisms so as not to feed the mail matter thereto.

The stamp unit 106 includes a stamp hub (not shown) that rotates in contact with one surface of the received mail matter M. The stamp unit 106 brings the stamp hub into contact with the stamp of the mail matter M to cancel the stamp. In the embodiment, the stamp unit 106 includes only one stamp hub provided at one side of the conveyor path 1, since the front-back sides and upper and lower ends of all mail matters M fed to the stamp unit 106 are already adjusted by the twisting/reversing unit 104 and the switchback unit 105.

The delivery/stacker unit 107 delivers the mail matters M into preset zones and collects them in the zones in accordance with the delivery information detected by the OCR scanner unit 103. The delivery/stacker unit 107 includes a reject/stacker unit (not shown) for preventing, for example, a mail matter M temporarily kept in and fed from the switchback unit 105 from being stamp-canceled by the stamp unit 106, and ejecting the same into the ejected matter collecting unit.

The apparatus 100 constructed as above determines, for example, whether the fee stamp read from the mail matter M by the OCR scanner unit 103 is appropriate for the weight of the mail matter M measured by the mass measuring unit 10. If the mail matter M is determined to be short paid, it is rejected to be printed with a canceling mark by the stamp unit 106.

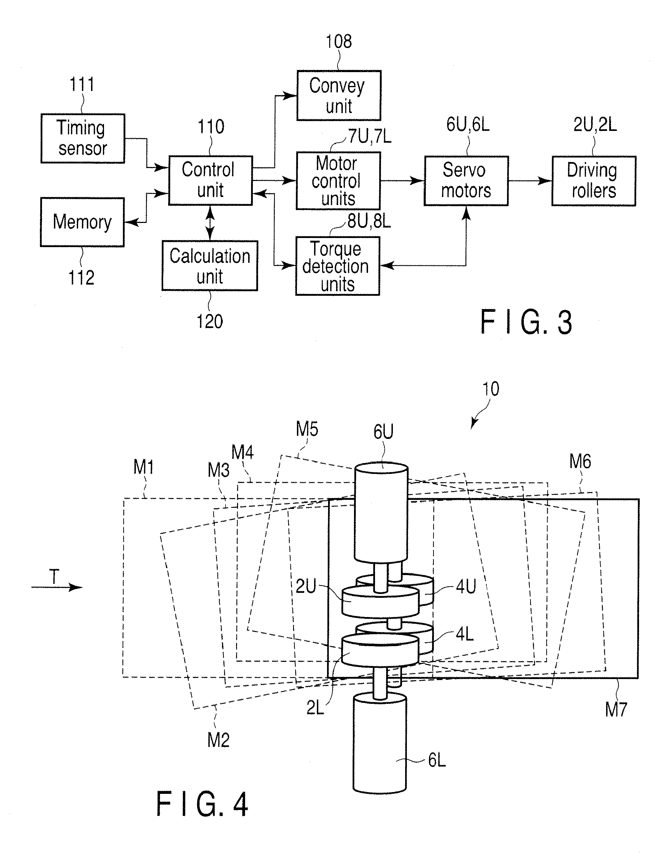

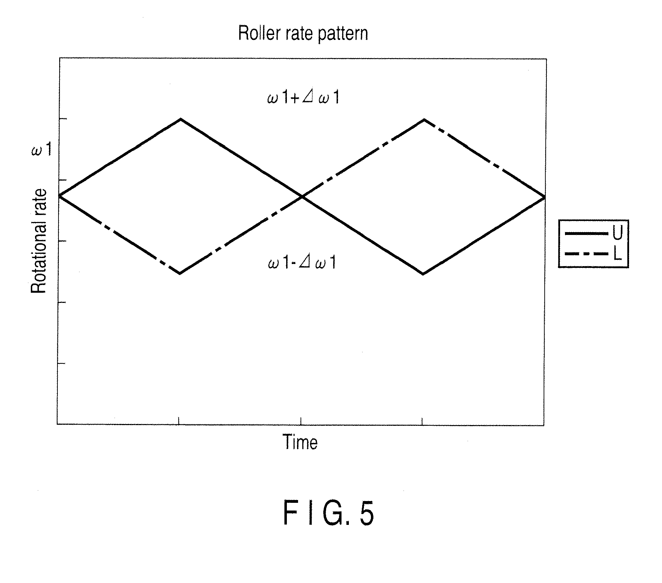

FIG. 2 is a schematic view illustrating an essential part of the mass measuring unit 10 for measuring the mass of each mail matter M passing through the above-described mechanical detection unit 102. FIG. 3 is a block diagram illustrating a control system for controlling the operation of the mass measuring unit 10. FIG. 4 is a view useful in explaining the operation of the mass measuring unit 2. FIG. 5 is a graph illustrating examples of rate patterns of two driving rollers 2U and 2L, described later, incorporated in the mass measuring unit 10.

Referring now to FIGS. 2 to 5, the structure and operation of the mass measuring unit 10 of the embodiment will be described.

The mass measuring unit 10 of the embodiment is **characterized in that** it can measure the mass of each moving mail matter M without stopping or decelerating it. Assume here that in the embodiment, each mail matter M is conveyed upright through the mechanical detection unit 102 (i.e., through the mass measuring unit 10) as shown in FIG. 4. Namely, a handling plane, on which each mail matter M is handled by the mass measuring unit 10 while it is passed through the unit 10, is set vertical.

As shown in FIG. 2, the mass measuring unit 10 includes two driving rollers 2U and 2L vertically separate from each other at one side (at the front side in FIG. 2) of the conveyor path 1. The two driving rollers 2U and 2L have rotation shafts 3U and 3L, respectively, which substantially vertically extend separate from each other and coaxial with each other. The driving rollers 2U and 2L rotate in contact with one side of each mail matter M conveyed by the conveyor path 1. In other words, the two driving rollers 2U and 2L are set rotatable in a preset direction to angularly move (rotate) and forward each mail matter M along the conveyor path 1.

The rotation shafts 3U and 3L of the two driving rollers 2U and 2L are coaxially connected, using couplings (not shown), to servo motors 6U and 6L, respectively, for rotating the driving rollers 2U and 2L at various rates.

With this structure, the mass measuring unit 10 of the embodiment can independently rotate, at a desired rate in different directions, the two driving rollers 2U and 2L that are vertically (i.e., perpendicular to the direction of conveyance) separate from each other, thereby rotating (angularly moving) each mail matter M conveyed by the conveyor path 1, as is shown in, for example, FIG. 4.

Two driven rollers 4U and 4L are provided at the opposite side (i.e., the rear side in FIG. 2) of the conveyor path 1, facing the two driving rollers 2U and 2L, respectively.

Like the driving rollers 2U and 2L, the two driven rollers 4U and 4L have rotation shafts 5U and 5L, respectively, which substantially vertically extend separate from each other and coaxial with each other. The rotation shafts 5U and 5L of the two driven rollers 4U and 4L are fixed to, for example, frames (not shown) incorporated in the mechanical detection unit 102. Namely, the two driven rollers 4U and 4L are set rotatable about the fixed rotation shafts 5U and 5L, respectively.

More specifically, one driven roller 4U is set rotatable in contact with the upper driving roller 2U. Similarly, the other driven roller 4L is set rotatable in contact with the lower driving roller 2L. The two driving rollers 2U and 2L are rubber rollers, and the two driven rollers 4U and 4L are two-layer rollers each formed of a sponge layer and a rubber layer.

Namely, the driven rollers 4U and 4L have cored bars (not shown) connected to the rotation shafts 5U and 5L via bearings (not shown), respectively. The sponge layers as first layers are provided on the outer surfaces of the cored bars, and the rubber layers as second layers are provided on the outer surfaces of the sponge layers. Further, the rotation shafts 5U and 5L are fixed to the mechanical detection unit 102 as mentioned above.

Accordingly, the sponge layers of the driven rollers 4U and 4L are deformed in accordance with the thickness of each mail matter M whenever each mail matter M passes therebetween, whereby each mail matter M is nipped by the two pairs of rollers 2U, 4U, 2L and 4L. While the two driving rollers 2U and 2L are rotated, each nipped mail matter M is conveyed, held therebetween.

Since the rotation shafts 5U and 5L of the driven rollers 4U and 4L are separate from each other, the driven rollers 4U and 4L can rotate independently of each other at different circumferential velocities. This can prevent an undesired force from being exerted on each mail matter M even when the portions of the mail matters M to be brought into contact with the driven rollers 4U and 4L have different thicknesses.

As shown in FIGS. 2 and 3, the servo motors 6U and 6L for rotating the driving rollers 2U and 2L, respectively, are connected to motor control units 7U and 7L and also to torque detection units 8U and 8L, respectively. Further, as shown in FIG. 3, a control unit 110 for controlling the operation of the mass measuring unit 10 is connected to a timing sensor 111 for detecting passing of the front end of each mail matter M conveyed toward the mass measuring unit 10, and also connected to a memory 112 that stores a data table, described later. The control unit 110 is further connected to a calculation unit 120 for calculating the mass of each mail matter M based on the detection results of the torque detection units 8U and 8L.

The motor control units 7U and 7L control the rotational rates of the servo motors 6U and 6L to rotate the two driving rollers 2U and 2L at the same rate as the process rate of the apparatus 100, i.e., as the conveyance rate of each mail matter M, before it is fed to the mass measuring unit 10. When the timing sensor 111 detects the passing of the front end of a mail matter M, the control unit 110 of the mass measuring unit 10 controls the servo motors 6U and 6L to rotate the two driving rollers 2U and 2L as indicated by the rate patterns shown in, for example, FIG. 5. The rate patterns for the driving rollers 2U and 2L are beforehand stored as control data in the memory 112.

When the two driving rollers 2U and 2L have been rotated in accordance with the rate patterns shown in, for example, FIG. 5 to rotate a mail matter M, the torque detection units 8U and 8L detect the currents supplied to the servo motors 6U and 6L, and refer to the data table stored in the memory 112 to thereby detect the torque $\tau$ of the servo motor 6U and 6L, respectively, based on the detected currents.

Further, when no mail matters M are conveyed, the torque detection units 8U and 8L detect the torque $\tau 0$ of the driving rollers 2U and 2L detected when the servo motors 6U and 6L accelerate and decelerate the driving rollers. The thus-obtained torque $\tau 0$ of the driving rollers 2U and 2L is beforehand stored in relation to time as a parameter in a data table (not shown) stored in the memory 112.

When the mass measuring unit 10 constructed as the above is used to measure the mass of a mail matter M, the control unit 110 rotates the driving rollers 2U and 2L in accordance with the rate patterns shown in, for example, FIG. 5, so that the mail matter M is conveyed while angularly moving along the vertical handling plane defined between the driving rollers 2U and 2L and the driven rollers 4U and 4L, as is indicated by the broken lines of FIG. 4.

At this time, the control unit 110 acquires information concerning the conveyance position of the mail matter M from the timing sensor 111, and starts control of angularly moving the mail matter M based on the rate patterns shown in FIG. 5, when the front end of the mail matter M is nipped between the driving rollers 2U and 2L and the driven rollers 4U and 4L. In FIG. 4, reference symbols M1 to M7 denote changes in the attitude of the mail matter M conveyed in the direction T.

It is desirable that the rate patterns for the driving rollers 2U and 2L be set so that at least the conveyance rates of the mail matter M detected before and after it is angularly moved are equal to each other, i.e., the conveyance rates of the mail matter M detected before and after it passes through the mass measuring unit 10 are equal.

In other words, it is desirable that the rate patterns for the driving rollers 2U and 2L be set so that the same processing time is required when the mail matter M is passed through the mass measuring unit 10 while being angularly moved, and when it is passed through the unit 10 without being angularly moved. Namely, it is desirable that the mail matter M is passed through the mass measuring unit 10 without delay of conveyance.

In the embodiment, the rate patterns are set so that the mail matter M assumes the same attitude before and after it is angularly moved, in addition to the setting of keeping the conveyance rate constant before and after the angular movement. By thus controlling the rotations of the two driving rollers 2U and 2L based on the above-mentioned rate patterns, no change will occur in the conveyance rate, and no skew or shift will occur in the conveyance attitude.

To angularly move each mail matter M during its conveyance as described above, it is necessary to accelerate and decelerate the two driving rollers 2U and 2L in accordance with preset rate patterns (shown in, for example, FIG. 5). In this case, when a mail matter M is angularly moved as described above, loads are exerted on the servo motors 6U and 6L to thereby increase the torque values of the servo motors 6U and 6L. Changes in torque depend upon the rate patterns of the driving rollers 2U and 2L, also upon the inertia moment of the driving system itself that includes, for example, the rotation shafts 3U and 3L of the driving rollers 2U and 2L, couplings (not shown), and the servo motors 6U and 6L, and upon the mass of each mail matter M as a rotation target. For instance, when angularly moving (rotating) a relatively heavy mail matter M, the servo motors 6U and 6L each require a relatively great torque corresponding to the mass of the mail matter M.

Namely, when all mail matters M are angularly moved (rotated) with the same rate pattern, the inertia moment of the driving system is constant, and hence the torque values of the driving rollers 2U and 2L vary in accordance with the mass of each mail matter M. Therefore, the mass of each mail matter M can be measured by monitoring changes in the torque values of the servo motors 6U and 6L and comparing the monitored values with reference values. In other words, by monitoring the current supplied to each servo motors 6U, 6L, the mass of each mail matter M can be measured.

For example, when the mass of a mail matter M is zero, i.e., when no mail matter M is conveyed, and the driving rollers 2U and 2L are rotated, without rotating any mail matter M, at the same rate patterns as those employed when rotating a mail matter M, the torque of each of the servo motors 6U and 6L varies only in accordance with the rate patterns and the inertia moment of the driving system. Namely, by storing, in the memory 112 in relation to the rate patterns, data indicating the torque of each of the driving rollers 2U and 2L detected with time when these rollers are rotated with no mail matter inserted therebetween, reference values used for measuring each mail matter M can be set.

When the mass of a mail matter M is actually measured, the mail matter M is angularly moved during its conveyance by rotating the driving rollers 2U and 2L in accordance with preset rate patterns (as shown in FIG. 5), and the torque τ of the servo motors 6U and 6L is monitored at preset time points during the conveyance of the mail matter M. The torque τ detected at each preset time point is compared with the torque τ0 stored as a reference value in a data table included in the memory 112, thereby determining the mass of the mail matter M from the difference between the detected and reference torque values.

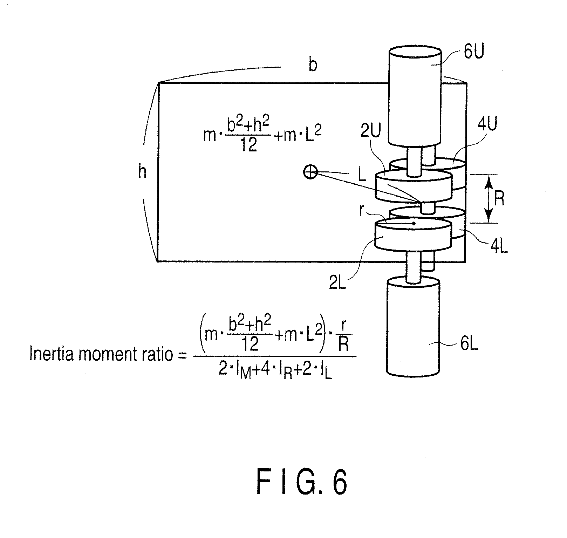

Referring now to FIGS. 6 to 8, a description will be given of the advantage of the mass measuring unit 10 of the embodiment, using example cases. Namely, conventional mass measurement, which is performed based on a change in the torque of a driving system that occurs when a mail matter is accelerated and decelerated along a conveyor path without being rotated, will be compared with the mass measurement performed by the mass measuring unit 10 of the embodiment based on a change in the torque of a driving system that occurs when a mail matter is rotated.

The inertia moment of the driving system of the mass measuring unit 10 constructed as above, i.e., the inertia moment when no mail matter M is angularly moved, is substantially equal to the sum of the inertia moment ($I_M$) of each of the two servo motors 6U and 6L, the inertia moment ($I_R$) of each of the four rollers, i.e., the two driving rollers 2U and 2L and the two driven rollers 4U and 4L, and the inertia moment ($I_L$) of each of the rotation shafts 3U and 3L of the driving rollers 2U and 2L. Actually, however, the inertia moment of the driving system is obtained by adding, to the sum of the above-mentioned inertia moments, the inertia moments of the coupling members that couple the driving rollers 2U and 2L to the rotation shafts 3U and 3L, respectively.

Further, the inertia moments of a mail matter M that occur when the mail matter M is angularly moved (rotated) is quantified as follows:

$$I_{MG} = m \cdot (b^2 + h^2)/12$$

$I_{MG}$: Inertia moment around the gravity center of the mail matter M
m: Mass of the mail matter M
b: Length of the mail matter M along the conveyor path
h: Height of the mail matter M

$$I_{MR} = m \cdot L^2$$

$I_{MR}$: Inertia moment around the rotation center of the mail matter M
L: Distance between the gravity center of the mail matter M and the rotation center of the mail matter M

From the above two equations, the inertia moment of the mail matter M that occurs when the mail matter M is rotated is given by

$$m \cdot (b^2 + h^2)/12 + m \cdot L^2$$

Namely, the ratio (hereinafter referred to as the "inertia moment ratio") of the inertia moment of the mail matter M itself to the inertia moment of the driving system that occurs when it does not rotate the mail matter M is expressed by the equation shown in FIG. 6.

Further, r/R in the equation of FIG. 6 is a coefficient used for converting the inertia moment of the mail matter M into the inertia moment of the driving system around its rotation shaft, r being the radius of each of the driving rollers 2U and 2L, R being the distance between the driving rollers 2U and 2L.

In contrast, when as in the prior art, the mass of a mail matter is measured by accelerating/decelerating the driving rollers while the mail matter is conveyed, the inertia moment of the mail matter is determined only from the distance between the rotation shaft and the mail matter, i.e., the radius r of each driving roller and the mass m of the mail matter, regardless of the position of the gravity center of the mail matter, the length of the mail matter, and the height of the mail matter, since the mail matter is not rotated. Namely, the inertia moment of the mail matter itself is given by

$$m \cdot r^2$$

Accordingly, if acceleration/deceleration control is performed by the mass measuring unit 10, without rotating the mail matter as in the prior art, the inertia moment ratio can be calculated by substituting the inertia moment ($m \cdot r^2$) of the mail matter in the equation shown in FIG. 6. However, in this case, the inertia moment ratio is extremely low, and the difference in the torque of each driving roller between the case of conveying the mail matter and the case of conveying no mail matter is extremely small, compared to the case where the mail matter is rotated as mentioned above.

If the torque difference detected by the torque detection units 8U and 8L of the mass measuring unit 10 is too small, the mass of the mail matter cannot accurately be detected. This being so, in order to realize highly accurate mass measurement, it is very effective to rotate the mail matter M as a mass measurement target to thereby increase changes in the torques of the motors.

The advantage of the mass measuring method of the embodiment will be described by comparing the inertia moment ratio obtained when the mass measuring method of the embodiment is employed, with the inertia moment ratio obtained when the conventional mass measuring method is employed.

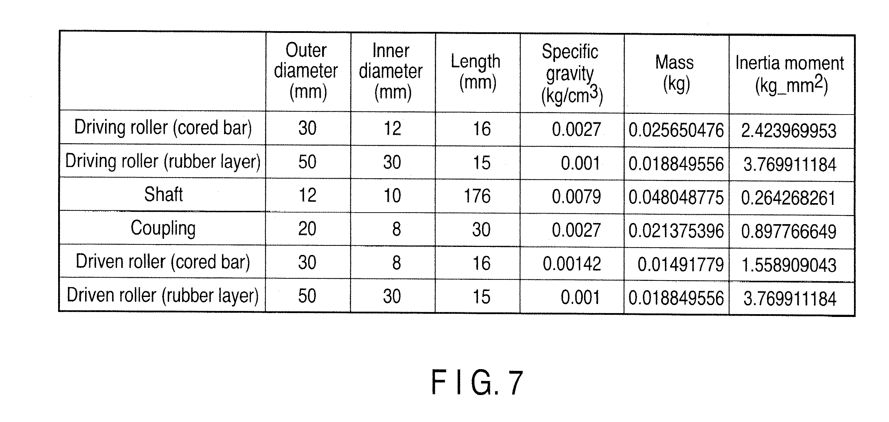

FIG. 7 is a table showing examples of the sizes of the structural elements of the mass measuring unit 10, examples of the specific gravities of the materials of the structural elements, and examples of the inertia moments of the structural elements. The examples of the structural elements of the mass measuring unit 10 were the core of a driving roller, the rotation shaft of the driving roller, a coupling, the core of a driven roller and the rubber layer of the driven roller.

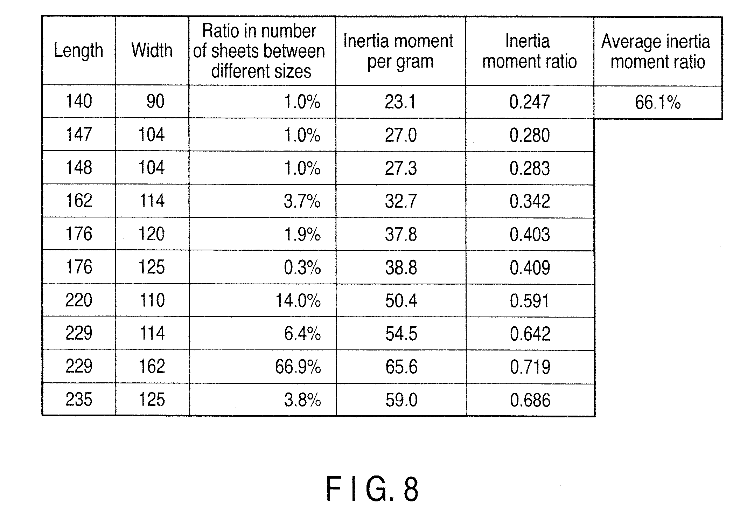

FIG. 8 is a table showing the ratio of the inertia moment of each mail matter M per 1g to that of the driving system, which ratio is obtained when mail matters M of various sizes are each rotated by the mass measuring method of the embodiment. The average of the inertia moment ratios calculated in consideration of the ratio of the number of mail matters of each size to that of mail matters of any other size was 66.1%.

In contrast, the corresponding inertia moment ratio obtained by the conventional mass measuring method was as low as 1.7%. Namely, the inertia moment ratio obtained by the mass measuring method of the embodiment is twenty times or more the inertia moment ratio obtained by the conventional mass measuring method.

As described above, the mass measuring method of the embodiment can detect even a slight difference between mail matters M as a large torque change, and hence can measure the mass of each mail matter M with high accuracy.

A description will now be given of a specific example of calculating the mass m of a mail matter M using the mass measuring method of the embodiment.

The entire torque τ0 of the driving rollers 2U and 2L detected when the driving rollers do not rotate a mail matter M, i.e., when the driving rollers are idling, can be expressed by the product of the above-mentioned inertia moment of the driving system and the angular acceleration ω of the driving system as given by the following equation:

$$\tau_0 = (2 \cdot I_M + 4 \cdot I_R + 2 \cdot I_L) \cdot \dot{\omega} \tag{1}$$

The angular acceleration ω of the driving system is detected at a certain point of time while the servo motors 6U and 6L are accelerating or decelerating.

In another aspect, the entire torque τ0 of the driving rollers 2U and 2L is proportional to a current value $i_M$ supplied to the servo motors 6U and 6L as given by the following equation:

$$\tau_0 = K \cdot i_M \qquad (2)$$

where K is a proportional constant.

From the equations (1) and (2), the following equation can be derived:

$$K/\overset{\bullet}{\omega} = (2 \cdot I_M + 4 \cdot I_R + 2 \cdot I_L)/i_M \qquad (3)$$

On the other hand, the entire torque of the driving rollers 2U and 2L detected when they rotate a mail matter M is the sum of the above-mentioned torque $\tau_0$ and an increase $\Delta\tau$ in torque due to the inertia moment of the mail matter M. Namely, the entire torque ($\tau_0 + \Delta\tau$) of the driving rollers 2U and 2L is given by the following equation:

$$\tau_0 + \Delta\tau = \left\{ (2 \cdot I_M + 4 \cdot I_R + 2 \cdot I_L) + (m \cdot \frac{b^2 + h^2}{12} + m \cdot l^2) \cdot \frac{r}{R} \right\} \cdot \overset{\bullet}{\omega} \qquad (4)$$

In another aspect, the entire torque ($\tau_0 + \Delta\tau$) is proportional to a current supplied to the servo motors 6U and 6L as given by the following equation:

$$\tau_0 + \Delta\tau = K \cdot (i_M + \Delta i_M) \qquad (5)$$

where K is a value unique to the driving system of the mass measuring unit 10 of the embodiment. The current value applied at this time is ($i_M + \Delta i_M$) obtained by adding a current value $\Delta i_M$ corresponding to the increase in the torque for rotating the mail matter M.

From the above equations (1) and (4), the following equation is derived:

$$\Delta\tau = m \cdot (\frac{b^2 + h^2}{12} + l^2) \cdot \frac{r}{R} \cdot \overset{\bullet}{\omega} \qquad (6)$$

Further, from the above equations (2) and (5), the following equation is derived:

$$\Delta\tau = K \cdot \Delta i_M \qquad (7)$$

Yet further, from the above equations (6) and (7), the following equation is derived:

$$K/\overset{\bullet}{\omega} = \frac{m \cdot (\frac{b^2 + h^2}{12} + l^2) \cdot \frac{r}{R}}{\Delta i_M} \qquad (8)$$

From the above equations (3) and (8), the following equation is derived:

$$m = \frac{(2 \cdot I_M + 4 \cdot I_R + 2 \cdot I_L) \cdot \Delta i_M}{(\frac{b^2 + h^2}{12} + L^2) \cdot \frac{r}{R} \cdot i_M} \tag{9}$$

Thus, the mass m of the mail matter M is calculated.

Namely, in the equation (9), the mass m of the mail matter M is a function of the current value $i_M$ supplied to the servo motors 6U and 6L when no mail matter is rotated, and the current value $\Delta i_M$ supplied to the servo motors 6U and 6L when a mail matter M is rotated. Accordingly, the mass m of the mail matter M can be calculated by monitoring the currents supplied to the servo motors 6U and 6L, using the torque detection units 8U and 8L.

As described above, in the mass measuring unit 10 of the embodiment, a mail matter M is rotated during its conveyance, with the conveyance rate unchanged, the torque values of the servo motors 6U and 6L detected when they accelerate and decelerate the driving rollers 2U and 2L to rotate the mail matter M are detected, and the detection result is compared with the torque of the driving system beforehand measured under the same conditions but without rotating any mail matter, thereby measuring the mass m of the mail matter M. By virtue of this structure, the mass of each of a plurality of mail matters M can be measured while they are successively conveyed at high rate. As a result, there are no changes in the gap between adjacent mail matters, and hence the conveyance throughput can be enhanced.

Further, in the above-described embodiment, since a relatively high torque is generated by rotating each mail matter M as a mass measuring target, to thereby enhance the resolution, the mass of each mail matter M can be measured at high accuracy.

In addition, in the above-described embodiment, the mass of each mail matter M is measured using the inertia moment detected when each mail matter M is rotated. Therefore, if a mail matter M that contains, for example, a metal chip such as a coin is measured, it is detected that the mail matter M is unnaturally heavy, i.e., contains a foreign material, and hence the mail matter is rejected. Namely, this mail matter is regarded as a to-be-rejected matter that cannot be processed in a later process, and is rejected. Thus, the mass measuring unit 10 of the embodiment positively rejects a foreign material contained mail matter M.

For instance, although in the above-described embodiment, the torque detection units 8U and 8L monitor the currents supplied to the servo motors 6U and 6L to detect the entire torque τ of the servo motors 6U and 6L, the invention is not limited to this structure. Alternatively, a measuring instrument (not shown), such as a strain gauge, may be used to detect the torque τ.

Further, although in the above-described embodiment, the mass measuring unit 10 is incorporated in the apparatus 100, the invention is not limited to this. Alternatively, a mass measuring function may be included in another processing unit. For example, if an attitude correction unit for correcting a conveyance attitude (skew or shift) of a mail matter M is provided along the conveyor path 1 extending through the apparatus 100, it may be made to have the mass measuring function.

Furthermore, although in the above-described embodiment, each mail matter M is rotated by producing a difference in the rates of the two driving rollers 2U and 2L located across the conveyor path 1, the invention is not limited to this, and only a single driving roller may be used to rotate each mail matter M. In this case, it is sufficient if the single driving roller is brought into contact with the portion of the surface of a mail matter M that is deviated from an imaginary center line extending through the center of gravity of the mail matter M along the conveyor path, and the driving roller is accelerated and decelerated. In any case, to measure the mass of the mail matter M, it is sufficient if the torque of the driving roller assumed when the mail matter M is rotated can be detected by some means. Thus, any mail matter rotation mechanism and any torque detection method may be employed.

For example, although in the embodiment, the driven rollers 4U and 4L are opposed to the driving rollers 2U and 2L with a mail matter M interposed therebetween, they are not essential elements for the present invention. If the mail matter M is laid down and conveyed horizontally, a guide plate member having a flat slippy surface is provided on the lower surface of the convey path, and the driving rollers 2U and 2L are pressed against the mail matter M, the mail matter M can be rotated by performing rate control of the driving rollers 2U and 2L.

Moreover, although in the embodiment, the driving rollers 2U and 2L are used as a mechanism for rotating a mail matter M, a driving belt, for example, which can be run along the convey path, may be used instead of the driving rollers 2U and 2L.

In addition, although in the embodiment, the torque τ0 of the rotation mechanism detected when it is idling is used as a reference value for measuring the mass of a mail matter, the invention is not limited to this. Alternatively, test sheets having various sizes and a certain weight may be supplied to the apparatus 100, whereby the outputs of the servo motors 6U and 6L of the mass measuring unit 10 be recorded and used as measurement reference values.

**Claims**

1. A mass measuring unit for measuring a mass of a sheet of paper, **characterized by** comprising:

   a conveyor path (1) configured to convey a sheet of paper;
   a rotation mechanism (2U, 2L) configured to rotate and forward the sheet of paper along the conveyor path (1);
   a torque detection unit (8U, 8L) configured to detect torque of the rotation mechanism; and
   a calculation unit (120) configured to calculate a mass of the sheet of paper, based on torque of the rotation mechanism that is detected by the torque detection unit when the rotation mechanism rotates the sheet of paper, and torque of the rotation mechanism that is detected when the rotation mechanism rotates no sheet of paper.

2. The mass measuring unit according to claim 1, **characterized in that** the rotation mechanism (2U, 2L) rotates the sheet of paper at substantially a same conveyance rate before and after rotating the sheet of paper.

3. The mass measuring unit according to claim 1, **characterized in that** the rotation mechanism (2U, 2L) rotates the sheet of paper at substantially a same conveyance rate and attitude before and after rotating the sheet of paper.

4. The mass measuring unit according to any of claims 1 to 3, wherein:

   the rotation mechanism includes a driving roller (2U, 2L) configured to rotate in contact with the sheet of paper conveyed by the conveyor path, and a motor (6U, 6L) configured to accelerate and/or decelerate the driving roller to rotate and forward the sheet of paper along the conveyor path;
   the torque detection unit (8U, 8L) is configured to detect torque of the motor; and
   the calculation unit (120) is configured to calculate a mass of the sheet of paper, based on torque of the motor that is detected by the torque detection unit when the rotation mechanism rotates the sheet of paper, and torque of the motor that is detected by the torque detection unit when the rotation mechanism rotates no sheet of paper.

5. The mass measuring unit according to claim 4, **characterized in that** the rotation mechanism further includes a driven roller (4U, 4L) configured to be rotated by the driving roller (2U, 2L) and cooperate with the driving roller to hold therebetween the sheet of paper conveyed by the conveyor path.

6. The mass measuring unit according to claim 4 or 5, **characterized in that** the driving roller (2U, 2L) rotates the sheet of paper, kept in contact with a portion of the sheet of paper deviated from an imaginary center line that extends in a direction of conveyance and passes through the center of gravity of the sheet of paper conveyed by the conveyor path (1).

7. The mass measuring unit according to any of claims 4 to 6, **characterized in that** the torque detection unit (8U, 8L) monitors a current supplied to the motor (6U, 6L) to detect the torque of the motor.

8. The mass measuring unit according to any of claims 1 to 7, **characterized in that** the rotation mechanism (2U, 2L) rotates the sheet of paper at substantially a same conveyance rate before and after rotating the sheet of paper.

9. The mass measuring unit according to any of claims 1 to 7, **characterized in that** the rotation mechanism (2U, 2L) rotates the sheet of paper at substantially a same conveyance rate and attitude before and after rotating the sheet of paper.

10. The mass measuring unit according to any of claims 1 to 9, wherein:

   the rotation mechanism includes a first driving roller (2U), a second driving roller (2L), a first motor (6U), and a second motor (6L), the first driving roller (2U) rotating in contact with a surface portion of the sheet of paper conveyed by the conveyor path (1), the second driving roller (2L) being vertically aligned with and separate from the first driving roller, the second driving roller rotating in contact with another surface portion of the sheet of paper conveyed by the conveyor path (1), the first and second motors (6U, 6L) independently accelerating and/or decelerating the driving roller (2U, 2L) such that the driving rollers rotate at different rates, thereby rotating and forwarding the sheet of paper along the conveyor path;
   the torque detection unit (8U, 8L) is configured to detect torque values of the first and second motors;
   the mass measuring unit further comprises a storing unit (112) configured to beforehand store torque values of the first and second motors (6U, 6L) detected by the torque detection unit (8U, 8L) when the rotation mechanism is idling under same conditions as when rotating the sheet of paper, with no sheet of paper conveyed by the conveyor path; and

the calculation unit (120) is configured to calculate a mass of the sheet of paper, based on torque values of the first and second motors (6U, 6L) that are detected by the torque detection unit (8U, 8L) when the rotation mechanism rotates the sheet of paper during conveyance thereof, and the torque values of the first and second motors stored in the storing unit.

11. The mass measuring unit according to claim 10, **characterized in that** the rotation mechanism further includes a first driven roller and a second driven roller (4U, 4L) configured to be rotated by the first and second driving rollers (2U, 2L), respectively, and to cooperate with the first and second driving rollers to hold therebetween the sheet of paper conveyed by the conveyor path.

12. The mass measuring unit according to claim 10 or 11, **characterized in that** the torque detection unit (8U, 8L) monitors currents supplied to the first and second motors (6U, 6L) to detect the torque values of the first and second motors.

13. The mass measuring unit according to any of claims 10 to 12, **characterized in that** in the rotation mechanism, the first and second driving rollers (2U, 2L) are accelerated and decelerated to rotate the sheet of paper at substantially a same conveyance rate before and after rotating the sheet of paper.

14. The mass measuring unit according to any of claims 10 to 12, **characterized in that** in the rotation mechanism, the first and second driving rollers (2U, 2L) are accelerated and decelerated to rotate the sheet of paper at substantially a same conveyance rate and attitude before and after rotating the sheet of paper.

**Amended claims in accordance with Rule 137(2) EPC.**

1. A mass measuring unit for measuring a mass of a sheet of paper, **characterized by** comprising:

a conveyor path (1) configured to convey a sheet of paper;
a rotation mechanism (2U, 2L) configured to rotate the conveyed sheet of paper in a plane along the conveyor path (1);
a torque detection unit (8U, 8L) configured to detect torque of the rotation mechanism; and
a calculation unit (120) configured to calculate a mass of the sheet of paper, based on torque of the rotation mechanism that is detected by the torque detection unit when the rotation mechanism rotates the sheet of paper, and torque of the rotation mechanism that is detected when the rotation mechanism rotates no sheet of paper.

2. The mass measuring unit according to claim 1, **characterized in that** the rotation mechanism (2U, 2L) conveys the sheet of paper at substantially a same conveyance rate before and after rotating the sheet of paper.

3. The mass measuring unit according to claim 1, **characterized in that** the rotation mechanism (2U, 2L) conveys the sheet of paper at substantially a same conveyance rate and attitude before and after rotating the sheet of paper.

4. The mass measuring unit according to any of claims 1 to 3, wherein:

the rotation mechanism includes a driving roller (2U, 2L) configured to rotate in contact with the sheet of paper conveyed by the conveyor path, and a motor (6U, 6L) configured to accelerate and/or decelerate the driving roller to rotate the sheet of paper in a plane along the conveyor path and forward the sheet of paper along the conveyor path;
the torque detection unit (8U, 8L) is configured to detect torque of the motor; and
the calculation unit (120) is configured to calculate a mass of the sheet of paper, based on torque of the motor that is detected by the torque detection unit when the rotation mechanism rotates the sheet of paper, and torque of the motor that is detected by the torque detection unit when the rotation mechanism rotates no sheet of paper.

5. The mass measuring unit according to claim 4, **characterized in that** the rotation mechanism further includes a driven roller (4U, 4L) configured to be rotated by the driving roller (2U, 2L) and cooperate with the driving roller to hold therebetween the sheet of paper conveyed by the conveyor path.

**6.** The mass measuring unit according to claim 4 or 5, **characterized in that** the driving roller (2U, 2L) rotates the sheet of paper, kept in contact with a portion of the sheet of paper deviated from an imaginary center line that extends in a direction of conveyance and passes through the center of gravity of the sheet of paper conveyed by the conveyor path (1).

**7.** The mass measuring unit according to any of claims 4 to 6, **characterized in that** the torque detection unit (8U, 8L) monitors a current supplied to the motor (6U, 6L) to detect the torque of the motor.

**8.** The mass measuring unit according to any of claims 1 to 7, **characterized in that** the rotation mechanism (2U, 2L) conveys the sheet of paper at substantially a same conveyance rate before and after rotating the sheet of paper.

**9.** The mass measuring unit according to any of claims 1 to 7, **characterized in that** the rotation mechanism (2U, 2L) conveys the sheet of paper at substantially a same conveyance rate and attitude before and after rotating the sheet of paper.

**10.** The mass measuring unit according to any of claims 1 to 9, wherein:

the rotation mechanism includes a first driving roller (2U), a second driving roller (2L), a first motor (6U), and a second motor (6L), the first driving roller (2U) rotating in contact with a surface portion of the sheet of paper conveyed by the conveyor path (1), the second driving roller (2L) being vertically aligned with and separate from the first driving roller, the second driving roller rotating in contact with another surface portion of the sheet of paper conveyed by the conveyor path (1), the first and second motors (6U, 6L) independently accelerating and/or decelerating the driving roller (2U, 2L) such that the driving rollers rotate at different rates, thereby rotating the conveyed sheet of paper in a plane along the conveyor path and forwarding the sheet of paper along the conveyor path;
the torque detection unit (8U, 8L) is configured to detect torque values of the first and second motors;
the mass measuring unit further comprises a storing unit (112) configured to beforehand store torque values of the first and second motors (6U, 6L) detected by the torque detection unit (8U, 8L) when the rotation mechanism is idling under same conditions as when rotating the sheet of paper, with no sheet of paper conveyed by the conveyor path; and
the calculation unit (120) is configured to calculate a mass of the sheet of paper, based on torque values of the first and second motors (6U, 6L) that are detected by the torque detection unit (8U, 8L) when the rotation mechanism rotates the sheet of paper during conveyance thereof, and the torque values of the first and second motors stored in the storing unit.

**11.** The mass measuring unit according to claim 10, **characterized in that** the rotation mechanism further includes a first driven roller and a second driven roller (4U, 4L) configured to be rotated by the first and second driving rollers (2U, 2L), respectively, and to cooperate with the first and second driving rollers to hold therebetween the sheet of paper conveyed by the conveyor path.

**12.** The mass measuring unit according to claim 10 or 11, **characterized in that** the torque detection unit (8U, 8L) monitors currents supplied to the first and second motors (6U, 6L) to detect the torque values of the first and second motors.

**13.** The mass measuring unit according to any of claims 10 to 12, **characterized in that** in the rotation mechanism, the first and second driving rollers (2U, 2L) are accelerated and decelerated to rotate the sheet of paper, thereby conveying the sheet of paper at substantially a same conveyance rate before and after rotating the sheet of paper.

**14.** The mass measuring unit according to any of claims 10 to 12, **characterized in that** in the rotation mechanism, the first and second driving rollers (2U, 2L) are accelerated and decelerated to rotate the sheet of paper, thereby conveying the sheet of paper at substantially a same conveyance rate and attitude before and after rotating the sheet of paper.

F I G. 1

F I G. 2

F I G. 3

F I G. 4

Roller rate pattern

$\omega 1 + \Delta \omega 1$

$\omega 1 - \Delta \omega 1$

$\omega 1$

Rotational rate

Time

| | |
|---|---|
| —— | U |
| —·—· | L |

F I G. 5

$$m \cdot \frac{b^2 + h^2}{12} + m \cdot L^2$$

$$\text{Inertia moment ratio} = \frac{\left(m \cdot \frac{b^2 + h^2}{12} + m \cdot L^2\right) \cdot \frac{r}{R}}{2 \cdot I_M + 4 \cdot I_R + 2 \cdot I_L}$$

FIG. 6

| | Outer diameter (mm) | Inner diameter (mm) | Length (mm) | Specific gravity $(kg/cm^3)$ | Mass (kg) | Inertia moment $(kg\_mm^2)$ |
|---|---|---|---|---|---|---|
| Driving roller (cored bar) | 30 | 12 | 16 | 0.0027 | 0.025650476 | 2.423969953 |
| Driving roller (rubber layer) | 50 | 30 | 15 | 0.001 | 0.018849556 | 3.769911184 |
| Shaft | 12 | 10 | 176 | 0.0079 | 0.048048775 | 0.264268261 |
| Coupling | 20 | 8 | 30 | 0.0027 | 0.021375396 | 0.897766649 |
| Driven roller (cored bar) | 30 | 8 | 16 | 0.00142 | 0.01491779 | 1.558909043 |
| Driven roller (rubber layer) | 50 | 30 | 15 | 0.001 | 0.018849556 | 3.769911184 |

F I G. 7

| Length | Width | Ratio in number of sheets between different sizes | Inertia moment per gram | Inertia moment ratio | Average inertia moment ratio |
|---|---|---|---|---|---|
| 140 | 90 | 1.0% | 23.1 | 0.247 | 66.1% |
| 147 | 104 | 1.0% | 27.0 | 0.280 | |
| 148 | 104 | 1.0% | 27.3 | 0.283 | |
| 162 | 114 | 3.7% | 32.7 | 0.342 | |
| 176 | 120 | 1.9% | 37.8 | 0.403 | |
| 176 | 125 | 0.3% | 38.8 | 0.409 | |
| 220 | 110 | 14.0% | 50.4 | 0.591 | |
| 229 | 114 | 6.4% | 54.5 | 0.642 | |
| 229 | 162 | 66.9% | 65.6 | 0.719 | |
| 235 | 125 | 3.8% | 59.0 | 0.686 | |

F I G. 8

Europäisches
Patentamt
European
Patent Office
Office européen
des brevets

## EUROPEAN SEARCH REPORT

**Application Number**

EP 10 15 4291

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 683 586 A1 (TOSHIBA KK [JP]) 26 July 2006 (2006-07-26) | 1-9 | INV. G01G17/02 G01G19/00 G01G19/414 B07C5/20 G03G15/00 G07B17/00 |
| Y | * paragraph [0063] - paragraph [0077]; figures 7,8a,8b * | 1-14 | |
| X | US 5 939 646 A (FOWLER PAT [US]) 17 August 1999 (1999-08-17) | 1 | |
| Y | * claim 1; figure 1 * | 1-14 | |
| Y | WO 2007/031176 A1 (SIEMENS AG [DE]; DRONNIK ANDRIY [DE]) 22 March 2007 (2007-03-22) * the whole document * | 1-14 | |
| Y | US 2009/071728 A1 (TURNER BRYAN J [US]) 19 March 2009 (2009-03-19) * the whole document * | 1-14 | |

| TECHNICAL FIELDS SEARCHED (IPC) |
|---|
| G01G B07C G03G G07B |

The present search report has been drawn up for all claims

| Place of search | Date of completion of the search | Examiner |
|---|---|---|
| Munich | 31 August 2010 | Grand, Jean-Yves |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 10 15 4291

This annex lists the patent family members relating to the patent documents cited in the above-mentioned European search report.
The members are as contained in the European Patent Office EDP file on
The European Patent Office is in no way liable for these particulars which are merely given for the purpose of information.

31-08-2010

| Patent document cited in search report | | | Publication date | Patent family member(s) | | | Publication date |
|---|---|---|---|---|---|---|---|
| EP | 1683586 | A1 | 26-07-2006 | JP<br>KR<br>US | 2006198489<br>20060084390<br>2006157319 | A<br>A<br>A1 | 03-08-2006<br>24-07-2006<br>20-07-2006 |
| US | 5939646 | A | 17-08-1999 | DE<br>DE<br>EP<br>JP | 69717413<br>69717413<br>0863445<br>10236674 | D1<br>T2<br>A1<br>A | 09-01-2003<br>25-09-2003<br>09-09-1998<br>08-09-1998 |
| WO | 2007031176 | A1 | 22-03-2007 | NONE | | | |
| US | 2009071728 | A1 | 19-03-2009 | EP<br>WO | 2195621<br>2009036251 | A1<br>A1 | 16-06-2010<br>19-03-2009 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005162407 A